# EUROPEAN PATENT APPLICATION

(11) **EP 4 745 262 A1**
(43) Date of publication of application: **20.05.2026**
(21) Application number: 25162105.8
(22) Date of filing: 06.03.2025
(51) Int. Cl.: C22C 38/44, C22C 38/48, C22C 38/34, C22C 38/02, C22C 38/04, F02C 6/12

(54) **AUSTENITIC STAINLESS STEEL ALLOYS AND TURBOCHARGER KINEMATIC COMPONENTS FORMED FROM THE SAME**

(30) Priority: 15.11.2024 IN 202441088407
(71) Applicant: Garrett Transportation I Inc., Torrance, CA 90504 (US)
(72) Inventor: SLOUKA, Marek, 62700 Brno (CZ); KANNUSAMY, Ragupathy, 560103 Bengaluru (IN); PROTIVA, Miroslav, 62700 Brno (CZ); KHANNA, Sumeet, 560103 Bengaluru (IN)
(74) Representative: Zacco UK Ltd

(57) **Abstract**

An austenitic stainless steel alloy and turbocharger kinematic components are provided. An austenitic stainless steel alloy includes, by weight, 24% to 26% chromium, 19% to 21% nickel, 1.25% to 2.5% molybdenum, 1.2% to 1.8% niobium, 0.4% to 0.7% carbon, 2.2% to 2.8% silicon, up to 1.4% tungsten, up to 1.0% manganese, up to 0.045% phosphorous, up to 0.045% sulphur, and a balance of iron, and other inevitable/unavoidable impurities that are present in trace amounts. The turbocharger kinematic components are made at least in part using this stainless steel alloy.

## Description

### TECHNICAL FIELD

The present disclosure generally relates to iron-based alloys, such as austenitic stainless steel alloys, and articles of manufacture formed therefrom. More particularly, the present disclosure relates to austenitic stainless steel alloys used, for example, in turbine and turbocharger kinematic components.

### BACKGROUND

In the context of turbine engines, turbochargers use heat and volumetric flow of engine exhaust gas to pressurize or boost an intake air stream into a combustion chamber. Specifically, exhaust gas from the engine is routed into a turbocharger turbine housing. A turbine is mounted inside the housing, and the exhaust gas flow causes the turbine to spin. The turbine is mounted on one end of a shaft that has a radial air compressor mounted on an opposite end thereof. Thus, rotary action of the turbine also causes the air compressor to spin. The spinning action of the air compressor causes intake air to enter a compressor housing and to be pressurized or boosted before the intake air is mixed with fuel and combusted within the engine combustion chamber.

Various systems within turbochargers include tribological interfaces, that is, surfaces of components that interact with and move relative to one another while the turbocharger is in operation. Such components, which are commonly referred to as kinematic components, may be susceptible to friction and wear, especially at elevated temperatures, which reduces their service life. Examples of turbocharger systems that may include kinematic components include waste-gate systems, which divert exhaust gasses away from the turbine to regulate airflow to the turbine, and variable geometry systems, which include a row of moveable inlet vanes to accomplish the same purpose. These systems commonly include various components such as shafts, bushings, valves, and the like, which are kinematic components because they interact and move relative to one another, and they are thus subject to friction wear. In the prior art, 310-grade stainless steel may have been used for such components. 310-grade stainless steel, hereinafter referred to as SS310, is known for use in relatively high temperature applications, but it performs poorly at temperatures over 980 °C.

US2009/0298726 and US2015/0086411 disclose heat-resistant bearing materials made of an austenitic iron matrix alloy which include a proportion of sulphur which is sufficient for achieving a solid lubricating action on the bearing surfaces thereof. The alloy disclosed in US2009/0298726 includes, *inter alia,* 0.2 - 0.5 wt% sulphur, and is described as being used advantageously as a bearing material in turbochargers in combination with petrol engines, and as being functionally reliable at temperatures exceeding 850°C. The alloy disclosed in US 2015/0086411 includes, *inter alia,* 0.15 - 0.5 wt% Sulphur, and is described as having the required properties, particularly low susceptibility to wear, in high temperatures of up to 950° and also in a temperature range of below 400°C.

EP 3 628 755 and EP 4 209 611 disclose austenitic stainless steel alloys for use in turbocharger kinematic components. The alloys disclosed in EP 3 628 755 comprise, *inter alia,* 1.2 - 1.7 wt% carbon, 1.6 - 1.8 wt% silicon, and, optionally, up to 0.5 wt% molybdenum. The alloys disclosed in EP 4 209 611 comprise, *inter alia,* 0.75 wt% - 1.7 wt% carbon, 3.5 - 4.0 wt% silicon, 2 wt% to 3 wt% W, and, 1.5 wt% to 2.5 wt% Cu.

It is desirable to provide further alternative materials that are suitable for use in fabricating kinematic components for turbine engines that can resist wear both during elevated temperature operations, in particular up to 1020°C, and also at temperatures below 400°C. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Austenitic stainless steel alloys, and turbocharger kinematic components fabricated from such alloys, are provided.

According to a first aspect of the disclosed technology we provide an austenitic stainless steel alloy which consists of, by weight, 24% to 26% chromium, 19% to 21% nickel, 1.25% to 2.5% molybdenum, 1.2% to 1.8% niobium, 0.4% to 0.7% carbon, 2.2% to 2.8% silicon, up to 1.4% tungsten, up to 1.0% manganese, up to 0.045% phosphorous, up to 0.045% sulphur, and a balance of iron, and other inevitable/unavoidable impurities that are present in trace amounts.

With regard to the foregoing alloy embodiments: the amount of carbon may be limited to 0.4% to 0.6%; alternatively or additionally the amount of tungsten may be limited to 0.8% to 1.4%; and, alternatively or additionally, the amount of molybdenum may be limited to 2.0% to 2.5%.

In another embodiment, by way of example only, a turbocharger kinematic component is fabricated using, at least in part, an austenitic stainless steel alloy that includes or consists of, by weight, 24% to 26% chromium, 19% to 21% nickel, 1.25% to 2.5% molybdenum, 1.2% to 1.8% niobium, 0.4% to 0.7% carbon, 2.2% to 2.8% silicon, up to 1.4% tungsten, up to 1.0% manganese, up to 0.045% phosphorous, up to 0.045% sulphur, and a balance of iron, and other inevitable/unavoidable impurities that are present in trace amounts.

With regard to the foregoing turbocharger kinematic component embodiments, and in particular to the austenitic stainless steel alloy used to fabricate the same: the amount of carbon may be limited to 0.4% to 0.6%; alternatively or additionally the amount of tungsten may be limited to 0.8% to 1.4%;and, alternatively or additionally, the amount of molybdenum may be limited to 2.0% to 2.5%.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The inventive subject matter will hereinafter be described in conjunction with the following drawing figures, wherein like numerals denote like elements, and wherein:
FIGURE 1 is a system view of an embodiment of a turbocharged internal combustion engine in accordance with the present disclosure;
FIGURE 2 is a cross-section view of the turbocharged internal combustion engine of Figure. 1;
FIGURE 3 is a system view of a turbocharger including a waste-gate system in accordance with the present disclosure;
FIGURE 4 is a graph of the hardness of an embodiment of alloy in accordance with the present disclosure and various prior art alloys;
FIGURE 5 is a graph of the results of tribological testing of an embodiment of alloy in accordance with the present disclosure and various prior art alloys;
FIGURE 6 is a graph of phase fraction versus temperature for a prior art austenitic stainless steel alloy (Alloy A);
FIGURE 7 is a graph of phase fraction versus temperature for an embodiment of alloy in accordance with the present disclosure;
FIGURE 8 shows photomicrographs at two magnifications illustrating the microstructure of a prior art austenitic stainless steel alloy (Alloy A); and
FIGURE 9 shows photomicrographs at two magnifications illustrating the microstructure of an alloy in accordance with an embodiment of the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

All of the embodiments and implementations of the austenitic stainless steel alloys, turbocharger kinematic components, and methods for the manufacture thereof described herein are exemplary embodiments provided to enable persons skilled in the art to make or use the invention and not to limit the scope of the invention, which is defined by the claims. Of course, the described embodiments should not be considered limited to such components, but may be considered applicable to any articles of manufacture where an iron alloy, or a stainless steel alloy may be employed. The invention is defined by the appended claims, and there is no intention to be bound by any expressed or implied theory presented in the preceding technical field, background, brief summary, or the following detailed description.

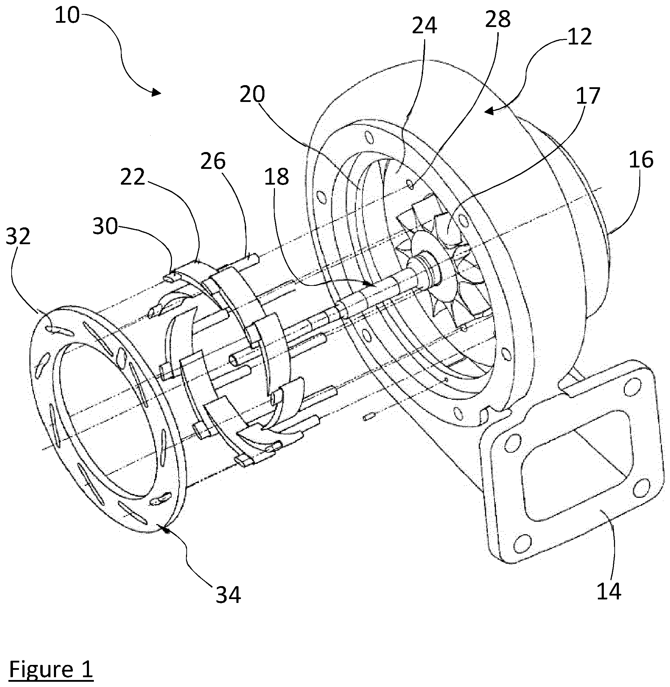

As noted above, the present disclosure is directed to austenitic stainless steel alloys for use in kinematic components of a turbocharger (for use in various vehicles and other applications) for purposes for wear with regard to the use and implementation of such kinematic components. As further noted above, a variable geometry turbocharger (among other possible turbocharger systems) may employ such kinematic components. Accordingly, for completeness of description, figure 1 illustrates a portion of a variable geometry turbocharger (VGT) 10 comprising a turbine housing 12 having a standard inlet 14 for receiving an exhaust gas stream, and an outlet 16 for directing exhaust gas to the exhaust system of the engine. A volute is connected to the exhaust inlet and an integral outer nozzle wall is incorporated in the turbine housing casting adjacent the volute. A turbine wheel 17 and shaft assembly 18 is carried within the turbine housing 12. Exhaust gas, or other high energy gas supplying the turbocharger, enters the turbine housing through the inlet 14 and is distributed through the volute in the turbine housing for substantially radial delivery to the turbine wheel through a circumferential nozzle entry 20.

Multiple vanes 22 are mounted to a nozzle wall 24 machined into the turbine housing using shafts 26 that project perpendicularly outwardly from the vanes. The shafts 26 are rotationally engaged within respective openings 28 in the nozzle wall. The vanes each include actuation tabs 30 that project from a side opposite the shafts and that are engaged by respective slots 32 in a unison ring 34, which acts as a second nozzle wall. The tabs 30, slots 32, and other described components move relative to one another, and as such it would be desirable to reduce the friction therebetween for tribological purposes.

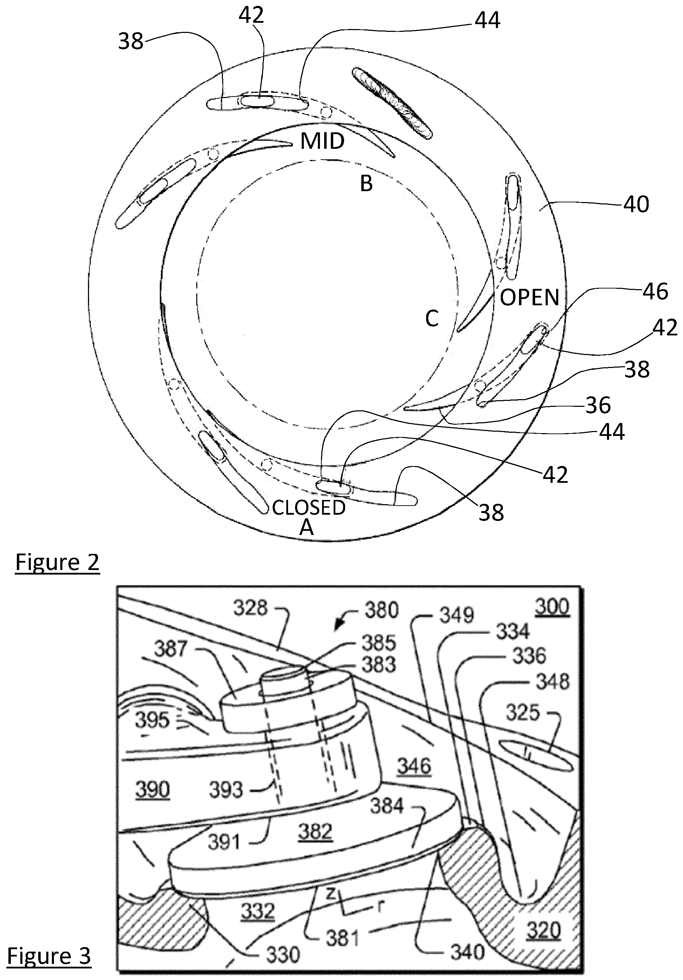

Figure 2 illustrates the general movement pattern of conventional vanes 36, as used in the VGT described and illustrated above, when actuated by the unison ring 34. Each vane tab 42 is disposed within a respective elongated slot 38 of a unison ring 40. In a closed position "A", the vane tab 42 is positioned adjacent a first end 44 of the slot 38. This position is referred to as a closed position because the vane is not flared radially outward, thereby serving to limit the flow of exhaust gas to the turbine. At an intermediate position "B" the unison ring 40 has been rotated a sufficient amount such that the vane tab 42 is moved within the slot 38 away from the first slot end 44 (as opposed to second slot end 46) towards a middle position of the slot. Again, it would be desirable to reduce friction as the components of the vanes 36 move relative to the components of the unison ring 40, for tribological purposes.

Additionally, as noted above, waste-gate systems may also include tribological components, and as such, for completeness of disclosure, figure 3 illustrates an exemplary waste-gate system. Specifically, figure 3 shows a cutaway view of an example of an assembly 300 that includes a turbine housing component 320 and a waste-gate 380. In the assembly 300, the turbine housing component 320 includes an opening 340, for example, as defined by a surface 332 of a substantially cylindrical wall portion 330 of the turbine housing component 320. As shown, the wall 332 extends to an edge (e.g., defining the opening 340) and then flattens joining a relatively flat surface 334, which may be referred to as a waste-gate seat. In the example of Figure 3, the surface 332 defines a relatively short passage, for example, having an axis (e.g., a z-axis), from which the surface 332 is disposed at a radial distance (e.g., an r-axis). Extending away from the opening 340, the seat 334 descends along another surface 336 (e.g., of the substantially cylindrical wall portion 330) to a floor 348 of an exhaust chamber formed in part by the turbine housing component 320, for example, in combination with a wall surface 346. As shown in figure 3, the wall surface 346 of the turbine housing component 320 rises to an edge that defines an opening 349 of the exhaust chamber and then extends outwardly to a relatively flat surface 328, which may include one or more apertures, etc., such as an aperture 325, for example, to attachment of another component to the turbine housing component 320.

In the example of figure 3, the waste-gate 380 includes a plug portion 382 that is connected to a waste-gate arm 390. The plug portion 382 includes a lower surface 381, a stem 383 that extends upwardly to an upper end 385 of the plug portion 382 and a rim surface 384 (e.g., disposed at a radius about the stem 383 and having an axial height). As shown, the stem 383 is received by a bore 393 of the waste-gate arm 390 where the bore 393 extends between a lower surface 391 and an upper surface 395 of the waste-gate arm 390. In the example of figure 3, a clamping washer 387 clamps to the stem 383 of the plug portion 382 to thereby prevent the stem 383 from sliding through the bore 393 of the waste-gate arm 390. Accordingly, as the waste-gate arm 390 pivots, the lower surface 381 of the plug portion 382 is positioned with respect to the seat 334 of the turbine housing component 320 for opening and closing of the waste-gate 380.

Typical embodiments of the present disclosure reside in a motor vehicle equipped with a gasoline or diesel powered internal combustion engine and a turbocharger. The turbocharger is equipped with a unique combination of features that may, in various embodiments, provide efficiency benefits by relatively limiting the amount of (and kinetic energy of) secondary flow in the turbine and/or compressor, as compared to a comparable unimproved system.

Stainless steel alloys for use in turbochargers may have operating temperatures up to about 1050 °C (or up to about 1100 °C), or greater. Suitable alloys should therefore have good strength and wear resistance at such temperatures. Turbochargers do not, however, always operate at such elevated temperatures, and advantageously, a stainless steel alloy for use in such an application should also exhibit good wear resistance at temperatures below 400°C.

Some embodiments of the present disclosure are directed to stainless steel alloys that include iron alloyed with various alloying elements, as are described in greater detail below in weight percentages based on the total weight of the alloy. The description of particular effects with regard to the inclusion of certain weight percentages of materials, as set forth below, are particular to the alloy of the present disclosure, and as such should not be understood as applying to any other alloy. Moreover, the description of particular effects with regard to the inclusion of certain weight percentages of materials is not intended to limit the scope or content of the present disclosure.

As such, in an embodiment, the stainless steel alloy of the present disclosure includes from 24 wt% to 26 wt% chromium (Cr).

Cr is added to provide the alloy with the desired oxidation resistance. It has been discovered that if Cr is added excessively, coarse primary carbides of Cr are formed, resulting in extreme brittleness. As such, the content of Cr is preferably limited to a maximum of about 26% so as to maintain an appropriate volume fraction within the stainless steel for corrosion resistance whilst avoiding the formation of such primary carbides.

In an embodiment, the stainless steel alloy of the present disclosure includes from 19 wt% to 21% nickel (Ni). Ni is included to stabilize the austenite phase.

In an embodiment, the stainless steel alloy of the present disclosure includes from 1.25 wt% to 2.5 wt% molybdenum (Mo). In one embodiment, the content of Mo is limited to 2.0 wt% to 2.5 wt%. If the content of Mo is excessive, Mo is likely to form the sigma phase when it is annealed, thereby deteriorating the corrosion resistance and impact resistance, which is deleterious to the tribological properties of the kinematic components of a turbocharger described herein.

In an embodiment, the austenitic stainless steel alloy of the present disclosure includes from 1.2 wt% to 1.8 wt% niobium (Nb). Nb is known to be an element that forms carbides and a solid solution strengthening element in austenitic stainless steels. The amount of Nb has been selected to optimize the carbide content.

In an embodiment, the stainless steel alloy of the present disclosure includes from 0.4 wt% to 0.7 wt% carbon (C). In one embodiment, the C content is limited to 0.4 wt% to 0.6 wt%. Increasing the carbon content of austenitic stainless steels is known to increase their wear resistance. The C may be precipitated as fine C particles which can provide solid lubrication at the surface of the alloy, and it may also improve the wear resistance of the iron matrix by the formation of carbides or intermetallic compounds between iron and alloying elements. Increasing the C content is also known to increase the hardness of the alloy, leading to poor machinability. As both good wear resistance and good machinability are required for the alloy to be suitable for use as in kinematic components for a turbocharger, the selected C content range has been found to provide an appropriate balance between these competing effects.

In an embodiment, the stainless steel alloy of the present disclosure includes from 2.3 wt% to 2.8 wt% silicon (Si). Si is included to promote the strength of the alloy and to improve the adhesiveness of the surface Cr₂O₃ layer to the alloy, thus assisting the Cr in providing the required oxidation resistance. Increasing the Si content is also known to increase the hardness of the alloy, leading to poor machinability. As both good wear resistance and good machinability are required for the alloy to be suitable for use as in kinematic components for a turbocharger, the selected Si content range has been found to provide an appropriate balance between these competing effects.

The austenitic stainless steel alloy of the present disclosure includes up to 1.4 wt% tungsten (W). In one embodiment, the W content is limited to 0.8 wt% to 1.4 wt%. Increasing the W content has been found to increase the Laves phase fraction in the alloy at the temperature range of interest, and has been optimized to provide the alloy good tribological properties.

The austenitic stainless steel alloy of the present disclosure includes up to 1 wt% manganese (Mn). The additional of Mn as this level is known to be beneficial to the castability of the alloy, and similar levels of Mn are included the prior art stainless steel alloys used in kinematic components for turbochargers for this reason.

Certain inevitable/unavoidable impurities may also be present in the stainless steel alloy of the present disclosure, for example as described below with regard to phosphorous and sulfur (the amounts of such described impurities (and others) are minimized as much as practical).

Phosphorus (P) may be present in the alloy. P is seeded in the grain boundaries or an interface, and is likely to deteriorate the corrosion resistance and toughness of the alloy. Therefore, the content of P is lowered as much as is as is practically possible. Complete removal of P is, however, impractical, in part due to the associated cost. As such, the P content is limited to 0.045 wt%.

Sulphur (S) may be present in the alloy. S in steels deteriorates their hot workability and can form sulfide inclusions, for example by combining with Mn, that influence pitting corrosion resistance negatively. Therefore, the S content is lowered as low as possible. Complete removal of S is, however, impractical, in part due to the associated cost. As such, the S content is limited to 0.045 wt%.

In some embodiments, high-cost elements that have in the prior art been proposed for inclusion in stainless steels are specifically excluded from the alloy (except in unavoidable impurity amounts). These excluded elements are, for example, Co, and/or V. Other excluded elements (except in unavoidable impurity amounts) are, for example, N, Ta, Al, B, La, and/or Zr.

The disclosed alloys, being stainless steel alloys, also include a balance of iron (Fe). As used herein, the term "balance" refers to the amount remain to achieve 100% of a total alloy, in terms of weight.

The articles of manufacture described herein, such as the kinematic components of a turbocharger fabricated with the above-described stainless steel alloys, may be formed using sintering processes, casting processes, or metal injection molding (MIM) processes. Further, the formed part may be subsequently machined to final dimensional requirements. For example, as is known in the art, sintering refers to a process of compacting and forming a solid mass of material by heat and/or pressure without melting the material to the point of liquefaction. The sintered part may then be fine machined to meet final dimensional requirements. It is therefore advantageous for a stainless steel alloy for use in kinematic components of a turbocharger to be relatively easily machinable.

Non-limiting examples of kinematic components of a turbocharger fabricated with the above-described stainless steel alloys includes nozzle rings, bushings, for example waste-gate (WG) bushings, and/or the like.

### COMPOSITION SELECTION

The composition of the new and inventive stainless steel alloy was derived using Thermo-Calc^{®} and JMatPro^{®} software. The percentage by weight of each of manganese, phosphorous, sulphur, chromium,and nickel was fixed at levels based on the ranges present in the relevant prior art alloy compositions. The levels of carbon, silicon, molybdenum, niobium, tungsten, nitrogen and vanadium were targeted for optimisation using the Thermo-Calc^{®} software.

The Thermo-Calc^{®} software was used to determine the volume fraction, composition and stability of the various phases in the alloy as a function of temperature. Thermophysical parameters such as density, liquidus, solidus and freezing range, were also obtained. Multiple simulations were iteratively run, each using hundreds of potential alloy compositions derived using randomized and fractional factorial designs. Kinetic simulations of the most promising compositions were evaluated using JMatPro^{®} in order to understand the long-term stability of the primary phases and the potential precipitation of carbide phases over time.

In order to produce an alloy suitable for use in the application described above which represents an improvement over the prior art alloys, a shortlist of alloys was selected which met the following criteria:
a) Cr in austenite at 1000°C >20%
b) MX at 1000°C 1.5 - 2%
c) MX at 850°C >0.08%
d) C content 0.4 - 0.7 wt%
e) W content 0 - 1.4 wt%
f) Austenite at 1000°C > 82%
g) Austenite at 850°C > 75%
h) C14 Laves phase at 850°C 0 - 1.5%
i) Sigma phase at 850°C < 13%
j) M23C6 phase at 850°C < 12%
k) Silicon content > 2 wt%
l) Vanadium content < 0.1 wt%

This analysis revealed a final list of five compositions which should produce alloys with appropriate properties to be used as kinematic components in turbochargers, and these are shown in Table 1 below..

**TABLE 1**

| | **#1 (wt%)** | **#2 (wt%)** | **#3 (wt%)** | **#4 (wt%)** | **#5 (wt%)** |
|---|---|---|---|---|---|
| **C** | 0.5 | 0.6 | 0.5 | 0.6 | 0.7 |
| **Si** | 2.5 | 2.5 | 2.5 | 2.5 | 2.5 |
| **Mn** | 0.5 | 0.5 | 0.5 | 0.5 | 0.5 |
| **P** | 0.02 | 0.02 | 0.02 | 0.02 | 0.02 |
| **S** | 0.02 | 0.02 | 0.02 | 0.02 | 0.02 |
| **Cr** | 25 | 25 | 25 | 25 | 25 |
| **Mo** | 2.2 | 1.5 | 1.5 | 1.5 | |
| **Nb** | 1.4 | 1.5 | 1.5 | 2.5 | 2 |
| **Ni** | 20 | 20 | 20 | 20 | 20 |
| **W** | 1 | | | | |
| **Fe** | Balance | Balance | Balance | Balance | Balance |

Finally, the five shortlisted compositions were ranked based on various weighted key performance indicators (KPIs) which included oxidation resistance, MX volume fraction, Laves phase volume fraction, M23C6 volume fraction, sigma phase volume fraction, and machinability, and the results are shown in Table 2 below.

**TABLE 2**

| | Weight | #1 | #2 | #3 | #4 | #5 |
|---|---|---|---|---|---|---|
| Oxidation resistance (simulation) | 7 | 9 | 9 | 9 | 9 | 9 |
| MX carbide (strength & wear resistance) | 7 | 5 | 7 | 5 | 9 | 7 |
| Laves phase | 7 | 7 | 3 | 3 | 3 | 3 |
| M23C6 | 3 | 3 | 3 | 3 | 3 | 3 |
| Sigma - reverse ranking | 5 | 5 | 7 | 5 | 5 | 9 |
| Machinability | 7 | 5 | 5 | 5 | 3 | 3 |
| Si oxidation / corrosion | 5 | 7 | 7 | 7 | 7 | 7 |
| Total weighted score | | 251 | 247 | 223 | 237 | 243 |

The two compositions with higher Nb levels (#4 and #5) were removed from consideration on the basis of their anticipated poor machinability, and the composition range for the inventive alloy determined on the basis of compositions #1, #2 and #3.

### ILLUSTRATIVE EXAMPLE

The present disclosure is now illustrated by the following non-limiting example. It should be noted that various changes and modifications can be applied to the following example and processes without departing from the scope of this invention, which is defined in the appended claims. Therefore, it should be noted that the following example should be interpreted as illustrative only and not limiting in any sense.

Referring below to Table 3, an example of the inventive alloy (referred to herein as "GKIN-1020") was prepared with the approximate wt.-% formula: 0.5% C, 2.5% Si, 0.5% Mn, 0.02% S, 0.02% P, 25% Cr, 2.2% Mo, 1.4% Nb, 20% Ni, 1.0% W, balance Fe. This matches the composition #1 shown in Table 1 above, and was selected for testing as the highest scoring of the five short listed compositions shown in Table 1. Table 3 also includes the composition of various prior art alloys, against which, GKIN-1020 will be compared.

**TABLE 3**

| | **GKIN-1020** | **SS310** | **GKIN-1.3** | **GT29** | **Alloy A** | **Alloy B** | **Alloy C** |
|---|---|---|---|---|---|---|---|
| **C** | 0.5 | <0.12 | 1.3 | 1.5 | 0.3 | 0.35 | 0.85 |
| **Si** | 2.5 | <1.5 | 1.7 | 3.75 | 2.5 | 1.3 | 3.00 |
| **Mn** | 0.5 | <2 | 1.25 | | 1.5 | <1 | |
| **P** | 0.02 | 0.02 | 0.02 | 0.02 | 0.02 | 0.02 | 0.02 |
| **S** | 0.02 | 0.02 | 0.01 | 0.02 | 0.02 | 0.015 | 0.3 |
| **Cr** | 25 | 25 | 25 | 26 | 24 | 25 | 24.50 |
| **Mo** | 2.2 | <0.5 | | 2.25 | 2 | | 2.5 |
| **Nb** | 1.4 | | | 1.5 | 2.5 | 1.15 | 2.00 |
| **Ni** | 20 | 20.5 | 20 | 20.5 | 19.5 | 25 | 18.50 |
| **W** | 1.0 | | | 2.5 | 2 | 3 | 2.75 |
| **N** | | | | | | | 0.4 |
| **Cu** | | | | 2 | 0.2 | | 2.25 |
| **V** | | | | | 1 | | |
| **Fe** | Balance | Balance | Balance | Balance | Balance | Balance | Balance |

The alloy GKIN-1.3 falls within the composition range disclosed in EP 3 628 755. The alloy GT29 falls within the composition range of the alloys disclosed in EP 4 209 611. Alloys A and B are two commercially available austenitic stainless steel alloys that have been proposed for use for kinematic components for turbochargers. Alloy C falls within the composition range disclosed in US2015/0086411.

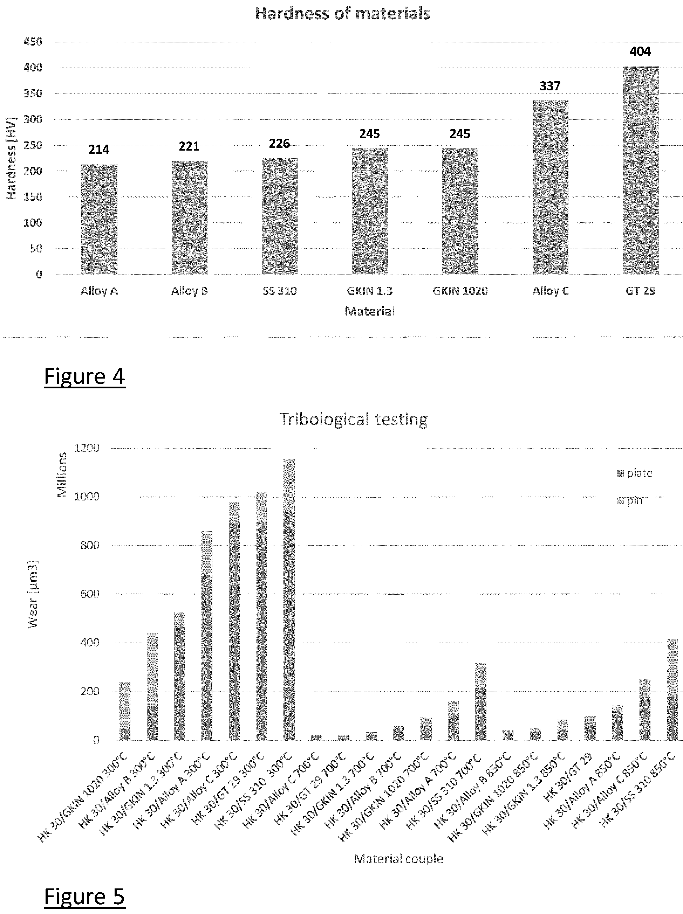

A Vickers hardness test (in accordance with ISO 6507-1) was carried out on each of these alloys, and the hardness of each is shown in TABLE 4 below and illustrated in Figure 4.

**TABLE 4**

| | **GKIN-1020** | **SS310** | **GKIN-1.3** | **GT29** | **Alloy A** | **Alloy B** | **Alloy C** |
|---|---|---|---|---|---|---|---|
| Hardness (Hv) | 245 | 226 | 245 | 404 | 221 | 214 | 337 |

As mentioned above, when choosing an alloy for the manufacture of kinematic components of turbocharger, the machinability of the alloy is one factor to be taken into consideration. Of the prior art alloys mentioned above, the machinability of SS310, and GKIN-1.3 is acceptable, but Alloys A , B & Cand GT29 are difficult to machine. The hardness of the alloy is one factor that contributes to its machinability, and these test results show that Alloy C and GT29 are significantly harder than the other alloys. In contrast, GKIN-1020 has a hardness which is very similar to GKIN-1.3 and SS310, and has been found to have a similarly acceptable machinability.

The factors which determine the machinability of an alloy are not straightforward, however, and other microstructural factors may come into play. This is illustrated by the fact that Alloys A & B have been found to be more difficult to machine than SS310, GKIN-1.3 and GKIN-1020, yet also have a hardness comparable to the relatively easily machined SS310,GKIN-1.3, and GKIN-1020 alloys.

In particular, it is believed that the machinability of the alloy is affected by the percentage by volume of carbides it contains, and also by the hardness of the carbides. The hardest carbides are those formed by V, Nb, W, Mo and Cr. The MC carbides (formed by V and Nb) have been found to have a high Knoop hardness of 2200 - 2800, the M₆C carbides (formed by W and Mo) have a moderate Knoop hardness of 1550 - 1750, and the M₇C₃ carbides (formed by Cr) have a lower Knoop hardness of 1300 - 1600. Although GKIN-1020 contains more carbon than Alloy A, and a similar total weight percentage of V, Nb, W, Mo and Cr to Alloy A, a higher percentage of the carbides formed in GKIN-1020 are lower and moderate hardness carbides, and it is believed that this contributes to the improved machinability of GKIN-1020 over Alloy A. The poor machinability of Alloy B may be caused by the higher W content.

By way of example, Table 5 below shows the machining parameters applied to machining tubes from a cast tube of each of Alloy A and GKIN-1020, the machined tubes having an outer diameter of 89mm, and inner diameter of 29.4mm. The weight per cm length of casting blank required to machine such a tube from Alloy A is higher than the weight per cm for GKIN-1020, and it is possible to manufacture around 27% more parts per unit weight from GKIN-1020 than from Alloy A. This is caused by the slightly higher density of Alloy A combined with the additional OD machining allowance required for Alloy A to account for the poorer machinability of Alloy A.

**TABLE 5**

| **Material** | **Alloy A** | **GKIN-1020** |
|---|---|---|
| Machining allowance of OD (mm) | 8 | 6 |
| Machining allowance of ID (mm) | 9 | 9 |
| Tuning allowance for two ends (mm) | 1.5 | 1.5 |
| Depth of cutting (mm) | 3.5 | 3.5 |
| Raw material removed at two ends of casting blank (mm) | 50 | 50 |
| Weight per cm length of casting blank (kg) | 0.4351 | 0.4092 |
| Density (kg/cm³) | 7.85 | 7.77 |

From the perspective of machinability, GKIN-1020 therefore represents a better choice for use in the manufacture of kinematic components of a turbocharger than Alloy A, Alloy B, Alloy C and GT29.

The wear resistance of GKIN-1020 was also compared with the prior art alloys. The metal alloy SS310 was formed into pins via casting (known as HK30) and plates were formed from SS310, Alloy A, Alloy B, Alloy C, GKIN-1.3, GT29 and GKIN-1020 via rough casting and machining. The wear resistance testing was a dry-sliding, reciprocating test that involved determining wear between one pin and two plates at 300 °C, 700 °C and 850 °C.

The amount of wear after two hours for the various alloy combinations is illustrated in Figure 5. Each bar in the chart shows the total volume of wear in µm³, whilst the lighter portion shows the wear on the pin, and the darker portion shows the wear of the plate.

The percentage improvement in wear resistance compared with SS310 is set out in Table 6 below. The percentage improvement was determined by evaluating the wear volume after a 2 hour test and comparing the wear volume with that of the SS310 baseline.

**TABLE 6**

| Pin material / Ring material | **HK30 / SS 310** | **HK30 / Alloy A** | **HK30/ Alloy B** | **HK30 / Alloy C** | **HK 30 / GKIN-1.3** | **HK 30 / GT 29** | **HK 30 / GKIN-1020** |
|---|---|---|---|---|---|---|---|
| **Improvement at 300 °C** | 0% | 15% | 62% | 25% | 54% | 12% | 79% |
| **Improvement at 700 °C** | 0% | 48% | 81% | 94% | 90% | 93% | 70% |
| **Improvement at 850 °C** | 0% | 75% | 91% | 40% | 80% | 76% | 88% |

GKIN-1020 shows the best wear resistance at 300°C, is out performed by Alloy C, GT29, GKIN-1.3 and Alloy B at 700°C, and is only marginally out performed by Alloy B 850°C

As such, embodiments of the present disclosure provide materials that are suitable for use in fabricating kinematic components for turbine engines that can resist wear during elevated temperature operations, and also at temperatures below 400 °C.

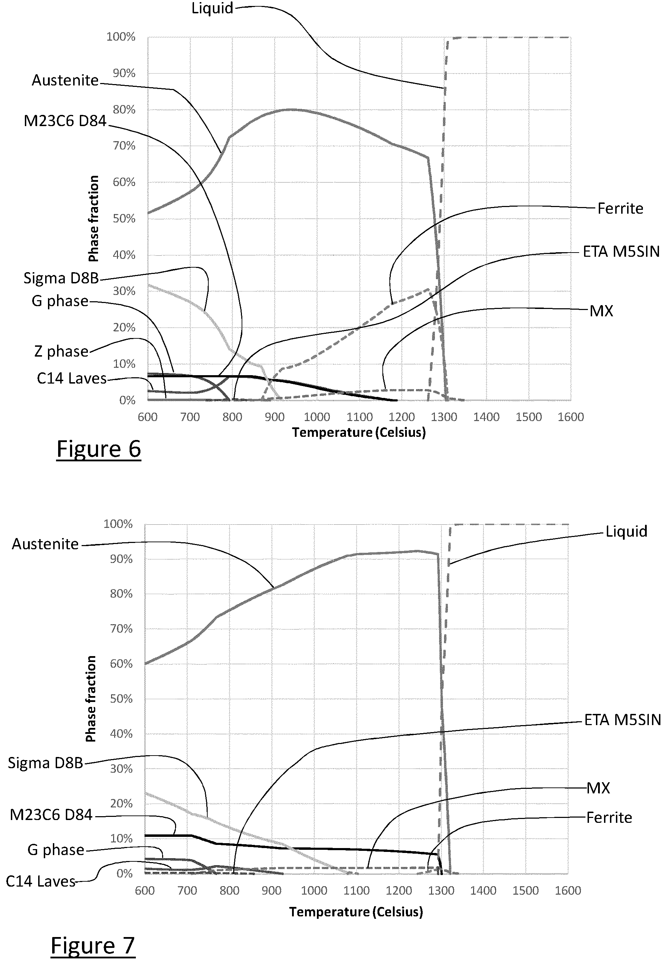

Figure 6 shows the percentages of the different phases present in Alloy A as a function of temperature, whilst Figure 7 shows the percentages of the different phases present in GKIN-1020, both determined using Thermo-Calc^{®}. This shows that GKIN-1020 has higher austenite stability, and no detrimental ferrite phase. GKIN-1020 also a higher percentage of beneficial MC precipitates over the entire temperature range of interest than Alloy A, and an optimized Laves phase fraction, both of which may contribute to the improved tribological performance of GKIN-1020 compared to Alloy A.

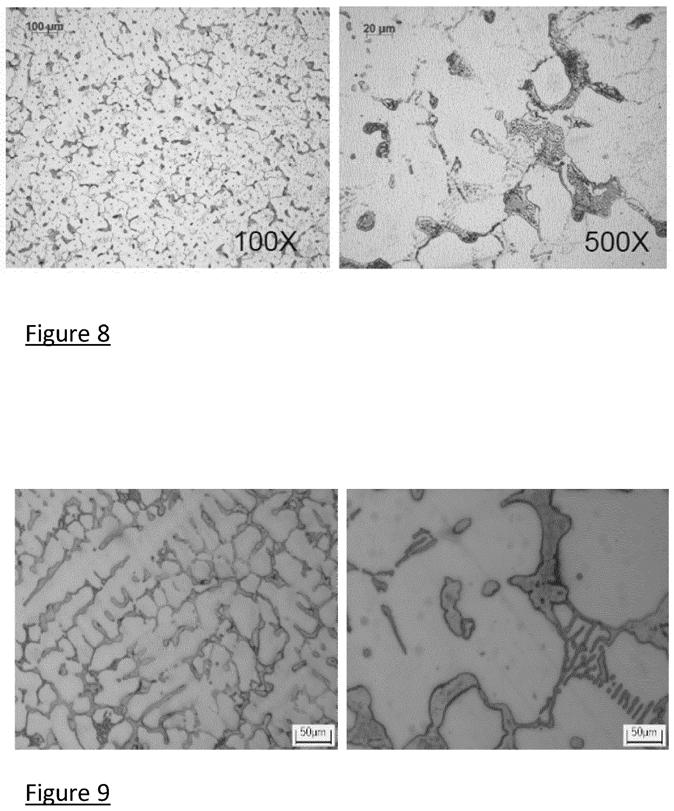

Referring to Figures 8., photomicrographs illustrating the microstructure of Alloy A are provided, whilst Figure 9 shows micrographs illustrating the microstructure of GKIN-1020 at the same magnifications. Figure 8 shows an austenite matrix with carbide precipitates (Cr, Nb, W), whilst Figure 9 shows an austenite matrix with intergranular eutectic-like primary chromium-rich carbides (M7C3 and/or M23C6 types) and metal carbides (MC type).

As noted above, examples of turbocharger systems that may include kinematic components include waste-gate systems and variable geometry systems. Of course, the described embodiments should not be considered limited to such components, but may be considered applicable to any articles of manufacture where an iron alloy, or a stainless steel alloy may be employed.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. An austenitic stainless steel alloy, consisting of, by weight:
24% to 26% chromium,
19% to 21% nickel,
1.25% to 2.5% molybdenum
1.2 to 1.8% niobium,
0.4% to 0.7% carbon,
2.2% to 2.8% silicon,
0% to 1.4% tungsten,
0% to 1.0% manganese,
0% to 0.045% phosphorous,
0% to 0.045% sulphur, and
a balance of iron, and other inevitable/unavoidable impurities that are present in trace amounts.

2. The austenitic stainless steel alloy of claim 1 comprising by weight 0.4% to 0.6% carbon.

3. The austenitic stainless steel alloy of claim 1 or 2 comprising, by weight, 0.8% to 1.4% tungsten.

4. The austenitic stainless steel alloy of any preceding claim comprising, by weight, 2.0% to about 2.5% molybdenum.

5. A turbocharger kinematic component comprising, at least as a part of its constituency:
an austenitic stainless steel alloy according to any preceding claim.

6. A turbocharger comprising a turbocharger kinematic component according to claim 5.

7. A vehicle comprising the turbocharger of claim 6.
